# EUROPÄISCHE PATENTANMELDUNG

(11) **EP 2 336 229 A1**
(43) Veröffentlichungstag der Anmeldung: **22.06.2011**
(21) Anmeldenummer: 09306290.9
(22) Anmeldetag: 21.12.2009
(51) Int. Cl.: C08K 3/22, C08K 5/5313

(54) **Flammgeschützte Polymerzusammensetzungen**

(71) Anmelder: LANXESS Deutschland GmbH, 51369 Leverkusen (DE)
(72) Erfinder: Roos, Andreas, Dr., 40547 Düsseldorf (DE); Bergmann, Gerd, Dr., 22523 Hamburg (DE); La Rosa, Manuel, 50674 Köln (DE); Cerin, Oriane, 59000 Lille (FR); Fontaine, Gaëlle, Dr., 59350 Saint-André -Lez-Lille (FR); Duquesne, Sophie, 59350 Saint-André -Lez-Lille (FR); Bourbigot, Serge, Prof., 59491 Villeneuve d'Ascq (FR)

(57) **Zusammenfassung**

Flammgeschützte Polymerzusammensetzung erhältlich
- aus einem oder mehreren α-Olefin-Vinylacetat-Copolymeren mit einem Vinylacetatgehalt von 40 bis 90 Gew.-%, bezogen auf das Gesamtgewicht des α-Olefin-Vinylacetat-Copolymeren und
- aus einer synergistischen Flammschutzmittel-Kombination, enthaltend als Komponente A ein Phosphinsäuresalz der Formel (I) 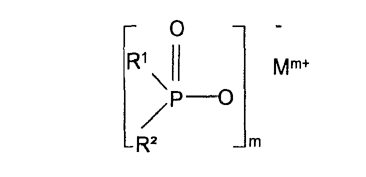 worin
R¹, R²
C₁-C₆-Alkyl, vorzugsweise C₁-C₄-Alkyl, linear oder verzweigt;
M
Calcium-, Aluminium-, Zink-Ionen;
m
2 oder 3
n
1 oder 3 bedeuten,

- als Komponente B ein Metallhydroxid, bevorzugt Aluminiumhydroxid (ATH) und
- als Komponente C eine Melaminverbindung.

## Beschreibung

Die vorliegende Erfindung betrifft eine flammgeschützte, aus einem oder mehreren α-Olefin-Vinylacetat-Copolymeren mit einem Vinylacetatgehalt von 40 bis 90 Gew.-%, bezogen auf das Gesamtgewicht des α-Olefin-Vinylacetat-Copolymeren bestehende Polymerzusammensetzung, deren Verwendung und eine Flammschutzkombination zur Aufrüstung von Kunststoffen und Kautschuken.

Flammgeschützte Polymerzusammensetzungen werden beispielsweise in Kabelanwendungen (Kabelmantel und Kabelisolation) sowie Fußbodenbelägen eingesetzt. Derartige Polymerzusammensetzungen sollen einen ausreichenden, den gesetzlichen Normen entsprechenden Flammschutz und zudem hervorragende Verarbeitungseigenschaften aufweisen.

Seit langem ist es bekannt, Polymersysteme mit anorganischen Flammschutzmitteln, halogenierten Flammschutzmitteln, Organophosphor-Flammschutzmitteln oder stickstoffbasierten Flammschutzmitteln auszurüsten.

Als mineralische Flammschutzmittel sind Metallhydroxide, insbesondere Aluminiumhydroxide (ATH) und Magnesiumhydroxide (MDH) zu nennen, die in Polymeren als flammhemmende Füllstoffe eingesetzt werden. Metallhydroxide werden dabei allein oder in Kombination miteinander und gegebenenfalls in Kombination mit weiteren Flammschutzadditiven eingesetzt.

Die Flammschutzwirkung beruht dabei im Wesentlichen auf einer endothermen Zersetzung der Kristalle, der Freisetzung von Wasser in Form von Wasserdampf bei gleichzeitiger Verdünnung der Konzentration brennbarer Gase in der Umgebung des angegriffenen Kunststoffs und der Bildung eines mehr oder weniger festen Oxidrückstands. Der Oxidrückstand selbst hat eine hohe innere Oberfläche und kann somit Russpartikel bzw. Vorprodukte des Rußes (polycyclische aromatische Kohlenwasserstoffe, PAK), adsorbieren. Diese sog. Ascheschicht fungiert als mechanische Stabilisierung des brennenden Polymers, so dass beispielsweise brennendes Abtropfen des Polymers reduziert oder ganz vermieden wird. Ferner wirkt die verkrustete Ascheschicht an der Oberfläche des brennenden Polymers als eine Art "Schutzbarriere" für die darunter liegenden Polymerschichten, wodurch ein schnelles Weiterbrennen vermieden werden kann.

Besonders bewährt hat sich der Einsatz von Metallhydroxiden in α-Olefin-Vinylacetat-Copolymeren.

Nachteilig sind jedoch die hohen Zugabemengen von Metallhydroxiden in Kunststoffmischungen, um dem Kunststoff einen ausreichenden Flammschutz zu gewährleisten. Dadurch werden die physikalische Eigenschaften (mechanische und elektrische Kenndaten) des Kunststoffs beeinträchtigt.

Weiterhin haben sich Salze von Phosphinsäuren (Phosphinate) als wirksame flammhemmende Zusätze für Polymersysteme erwiesen. Calcium- und Aluminiumphosphinate sind in Polyestern oder Polyamiden als besonders effektiv beschrieben worden und beeinträchtigen die Materialeigenschaften der Polymermassen weniger als z. B. Alkalimetallsalze.

Auch wurden synergistischen Kombinationen von Phosphinaten mit bestimmten stickstoffhaltigen Verbindungen gefunden, die in vielen Polymeren als Flammschutzmittel effektiver wirken, als die Phosphinate alleine. Bekannt sind beispielsweise Melamin und Melaminverbindungen als wirksame Synergisten, wie etwa Melamincyanurate und Melaminphosphat.

Aufgabe der vorliegenden Erfindung ist daher, eine Polymerzusammensetzung bereitzustellen, bei der das Füllstoffsystem (aus flammhemmenden Substanzen) derart variiert wird, dass die Flammschutzwirkung zumindest gleich bleibt oder aber verbessert wird, jedoch die mechanischen Eigenschaften des Polymers verbessert und vor Allem die Härte verringert wird.

Zur Lösung dieser Aufgabe schlägt die vorliegende Erfindung eine flammgeschützte Polymerzusammensetzung der eingangs genannten Art vor, welche aus einer oder mehreren α-Olefin-Vinylacetat-Copolymeren mit einem Vinylacetatgehalt von 40 bis 90 Gew.-%, bezogen auf das Gesamtgewicht des α-Olefin-Vinylacetat-Copolymeren und aus einer synergistischen Flammschutzmittel-Kombination, enthaltend als Komponente A ein Phosphinsäuresalz der Formel (I). 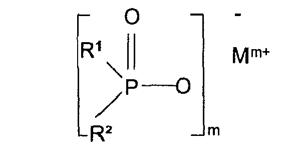 worin
- R¹, R²: C₁-C₆-Alkyl, vorzugsweise C₁-C₄-Alkyl, linear oder verzweigt;
- M: Calcium-, Aluminium-, Zink-Ionen;
- m: 2 oder 3
bedeuten,
als Komponente B ein Metallhydroxid, bevorzugt Aluminiumhydroxid (ATH) und
als Komponente C eine Melaminverbindung.
Komponente A wird hier auch als Phosphinate bezeichnet.

Überraschenderweise wurde festgestellt, dass durch die Kombination von Metallhydroxiden, Phosphinaten und Melaminverbindungen die Flammschutzeigenschaften (insbesondere der LOI und das UL-94 Rating) signifikant verbessert werden und gleichzeitig die Flexibilität der Materialien erhöht wird bzw. niedrigere Härten erzielbar sind.

Für die Beurteilung des Flammschutzes werden verschiedene Parameter herangezogen.

Ein indikativer Wert zur Beurteilung des Flammschutzes und insbesondere der Entzündbarkeit ist der Limiting Oxygen Index (LOI) nach ISO 4589. Er beschreibt die Minimalkonzentration an Sauerstoff in einer Sauerstoffmischung, die gerade in der Lage ist, die Verbrennung eines vertikal orientierten Prüfkörpers zu unterstützen. Bei niedrigerer Sauerstoffkonzentration erlischt die Flamme. Hohe LOI-Werte bedeuten daher hoher Flammschutz bzw. niedrige Entzündbarkeit.

Weitere für den Flammschutz relevante Kennwerte können mit dem Cone Calorimeter bestimmt werden, wie etwa:
- die "Peak-Heat-Retease-Rate" in KW/m² (PHRR); dies ist die maximale Leistungsabgabe pro Flächeneinheit, die im Cone-Calorimeter bei der Verbrennung der Probe gemessen wurde. Je geringer die PHRR, desto besser ist die Probe flammgeschützt.
- die "Time to Ignition" (TTI); dies ist der Zeitpunkt, bei der die Probe durch die Wärmeausstrahlung im Cone-Calorimeter zu brennen beginnt. Je höher der TTI-Wert, desto besser ist die Probe flammgeschützt.

Ein weiteres Verfahren zur Beurteilung und Klassifizierung der Brennbarkeit von Kunststoffen ist die Vorschrift UL 94. Die UL94-Klassifizierung wird an 3.2 mm dicken Proben durchgeführt. Nach der UL 94-V-Norm erfolgt eine Einstufung in nicht klassifiziert (NC), V2 (besser), V1 (noch besser), V0 (Höchsteinstufung).

Vorzugsweise handelt es sich bei der Komponente A um ein Aluminiumphosphinat.

Es handelt sich bevorzugt bei der Melaminverbindung um Melaminphosphat, Melaminborat und/oder Melamincyanurat.

Bevorzugt beträgt die Gesamtmenge an synergistische Flammschutzmittelkombination der erfindungsgemäßen Polymerzusammensetzung zwischen 90 und 310 phr, besonders bevorzugt zwischen 100 und 190 phr.

Die erfindungsgemäße Polymerzusammensetzung weist bevorzugt 70 bis 190 phr Komponente B, 10 bis 60 phr Komponente A und 10 bis 60phr Komponente C auf.

Es hat sich auch herausgestellt, dass eine bestimmte Zusammensetzung der erfindungsgemäßen Flammschutzmittelkombination die synergistische Wirkung besonders signifikant erhöht.

Besonders bevorzugt weist die erfindungsgemäße Polymerzusammensetzung 80 bis 160 phr ATH, 10 bis 30 phr Aluminiumphoshinat und 10 bis 20 phr Melaminphosphat bzw. Melaminborat auf.

Hierbei bedeutet "phr" parts per hundred rubber.

Die eingesetzten α-Olefin-Vinylacetat-Copolymere zeichnen sich durch hohe Vinylacetat-Gehalte von ≥40 Gew.-%, bezogen auf das Gesamtgewicht des α-Olefin-Vinylacetat-Copolymeren aus. Bevorzugt beträgt der Vinylacetat-Gehalt der erfindungsgemäß eingesetzten α-Olefin-Vinylacetat-Copolymere 50 Gew.-% bis 80 Gew.-%, bezogen auf das Gesamtgewicht der α-Olefin-Vinylacetat-Copolymere.

Das eingesetzte α-Olefin-Vinylacetat-Copolymer kann neben den auf dem α-Olefin und Vinylacetat basierenden Monomereinheiten ein oder mehrere weitere Comonomereinheiten aufweisen (z.B. Terpolymere), z.B. basierend auf Vinylestern und/oder (Meth)acrylaten. Die weiteren Comonomereinheiten sind ― sofern weitere Comonomereinheiten in dem α-Olefin-Vinylacetat-Copolymer vorliegen, in einem Anteil von bis zu 10 Gew.-%, bezogen auf das Gesamtgewicht des α-Olefin-Vinylacetat-Copolymeren vorhanden, wobei sich der Anteil der auf dem α-Olefin basierenden Monomereinheiten entsprechend verringert. Somit können z.B. α-Olefin-Vinylacetat-Copolymere eingesetzt werden, die aus 40 Gew.-% bis 90 Gew.% Vinylacetat, 10 Gew.-% bis 60 Gew.-% α-Olefin und 0 bis 10 Gew.-% mindestens eines weiteren Comonomeren aufgebaut sind, wobei die Gesamtmenge an Vinylacetat, α-Olefin und dem weiteren Comonomeren 100 Gew.-% beträgt.

Als α-Olefine können in den eingesetzten α-Olefin-Vinylacetat-Copolymeren alle bekannten α-Olefine eingesetzt werden. Bevorzugt ist das α-Olefin ausgewählt aus Ethen, Propen, Buten, insbesondere n-Buten und i-Buten, Penten, Hexen, insbesondere 1-Hexen, Hepten und Octen, insbesondere 1-Octen.

Es können auch höhere Homologe der genannten α-Olefine als α-Olefine in den α-Olefin-Vinylacetat-Copolymeren eingesetzt werden. Die α-Olefine können des Weiteren Substituenten tragen, insbesondere C₁-C₅-Alkylreste. Bevorzugt tragen die α-Olefine jedoch keine weiteren Substituenten. Des Weiteren ist es möglich, in den α-Olefin-Vinylacetat-Copolymeren Mischungen zweier oder mehrerer verschiedener α-Olefine einzusetzen. Bevorzugt ist es jedoch, keine Mischungen verschiedener α-Olefine einzusetzen. Bevorzugte α-Olefine sind Ethen und Propen, wobei Ethen besonders bevorzugt als a-Olefin in den α-Olefin-Vinylacetat-Copolymeren eingesetzt wird.

Somit handelt es sich bei dem bevorzugt eingesetzten α-Olefin-Vinylacetat-Copolymer um ein Ethylen-Vinylacetat-Copolymer.

Besonders bevorzugte Ethylen-Vinylacetat-Copolymere weisen einen Vinylacetat-Gehalt von 50 Gew.-% bis 80 Gew.-%. auf.

Üblicherweise werden die bevorzugt eingesetzten Ethylen-Vinylacetat-Copolymere mit hohen Vinylacetat-Gehalten als EVM-Copolymere bezeichnet, wobei das "M" in der Bezeichnung das gesättigte Rückgrat der Methylen-Hauptkette des EVMs andeutet.

Die verwendeten α-Olefin-Vinylacetat-Copolymere, bevorzugt Ethylen-Vinylacetat-Copolymere, weisen im Allgemeinen MFI-Werte (g/10 min), gemessen nach ISO 1133 bei 190 °C und einer Last von 21,1 N, von 1 bis 40, bevorzugt 1 bis 35 auf.

Die Mooney-Viskositäten gemäß DIN 53 523 ML 1+4 bei 100 °C betragen im Allgemeinen 3 bis 80, bevorzugt 20 bis 65 Mooney-Einheiten.

Das zahlenmittlere durchschnittliche Molekulargewicht (Mw), bestimmt mittels GPC, beträgt im Allgemeinen von 5000 g/mol bis 800000 kg/mol, bevorzugt 100000 g/mol bis 400000 g/mol.

Besonders bevorzugt werden in der erfindungsgemäßen flammgeschützten Polymerzusammensetzung Ethylen-Vinylacetat-Copolymere eingesetzt, die zum Beispiel unter den Handelsnamen Levapren^{®} oder Levamelt^{®} der Lanxess Deutschland GmbH kommerziell erhältlich sind.

Die erfindungsgemäße Polymerzusammensetzung weist einen LOI von mindestens 35% und gleichzeitig eine maximale Härte von 85 Shore A auf.

Die erfindungsgemäße flammgeschützte Polymerzusammensetzung kann in Kunststoffen und Kautschuken, thermoplastischen Elastomeren oder thermoplastischen Vulkanisaten verwendet werden.

Eine weitere Erfindung ist die Verwendung der erfindungsgemäßen flammgeschützten Polymerzusammensetzung für die Herstellung von Kabeln, Kunststoff-Formmassen, elastischen Formmassen, Fußbodenbelägen (besonders in öffentlichen Verkehrsmitteln bzw. Gebäuden), elektrischen, beschichteten Leitern und Klebstoffen bzw. zur Modifizierung von Thermoplasten, thermoplastischen Elastomeren und thermoplastischen Vulkanisaten verwendet werden.

Es ist daher vorstellbar, die erfindungsgemäße flammgeschützten Polymerzusammensetzung auch in Blends einzusetzen. Hierbei kommen beispielsweise folgende Polymere in Frage: HNBR, EPDM, EVA, HDPE, LDPE, Polyamid und/oder Copolyester.

Auch die Flammschutzmittel-Kombination zur Herstellung flammgeschützter Polymer-zusammensetzung aus einem oder mehreren α-Olefin-Vinylacetat-Copolymeren mit einem Vinylacetat-Gehalt von 40 bis 90 Gew.-%, bezogen auf das Gesamtgewicht des α-Olefin-Vinylacetat-Copolymeren, stellt eine weitere Erfindung dar, wobei sie als Komponente A ein Aluminiumphoshinat, als Komponente B ein Metallhydroxid, bevorzugt Aluminiumhydroxid (ATH), und als Komponente C ein Melaminverbindung enthält.

Bevorzugt ist ein Vinylacetatgehalt von 50 ― 80 Gew.-% bezogen auf das Gesamtgewicht des α-Olefin-Vinylacetat-Copolymeren.

Es hat sich herausgestellt, dass diese Kombination eine hervorragende Flammschutzwirkung aufweist, welche für das besagte α-Olefin-Vinylacetat-Copolymer im Hinblick auf eine gleichzeitig niedrige Härte besonders gut geeignet ist.

Die erfindungsgemäße Flammschutzmittelkombination weist bevorzugt 70 bis 190 phr Komponente B, 10 bis 60 phr Komponente A und 10 bis 60phr Komponente C auf.

Vorzugsweise beträgt die erfindungsgemäße Flammschutzmittelkombination 80 bis 160 phr ATH, 10 bis 30 phr Aluminiumphosphinat und auf 10 bis 20 phr Melaminphosphat bzw. Melaminborat auf.

Die erfindungsgemäße Flammschutzmittelkombination ist zur Aufrüstung von Kunststoffen und Kautschuken, thermoplastischen Elastomeren bzw. thermoplastischen Vulkanisaten geeignet.

Bevorzugt wird sie in Ethylen-Vinylacetat-Copolymere eingesetzt, die zum Beispiel unter den Handelsnamen Levapren^{®} oder Levamelt^{®} der Lanxess Deutschland GmbH kommerziell erhältlich sind, oder in Blends mit HNBR, EPDM, EVA, HDPE, LDPE, Polyamiden und/oder Copolyestern.

Bevorzugt beträgt die Gesamtmenge an synergistische Flammschutzmittelkombination zwischen 90 und 310 phr, besonders bevorzugt zwischen 100 und 190 phr für die oben genannten Verwendungen.

Nachstehend wird anhand von Beispielen die Erfindung näher erläutert:

### Verwendete Substanzen:

| | |
|---|---|
| EXOLIT OP 1230 (Fa. Clariant): | Phosphinsäuresalz |
| MELAGARD MP (Fa. Italmatch Chemicals): | Melaminphoshpat |
| MELAGARD MB(Fa. Italmatch Chemicals): | Melaminborat |
| MELAGARD MC(Fa. Italmatch Chemicals): | Melamincyanurat |
| Pcrkadox 14-40 B-PD (Fa. AKZO NOBEL): | Vernetzungsmittel |
| Rhenofit TAC/S (Fa. Rheinchemie): | Coagenz |
| CORAX N 550/30 (Fa. Evonik Industrics): | Ruß |
| Vulkasil N(Fa. Lanxess Deutschland GmbH): | Silica (heller Füllstoff) |
| Diplast TM 8-10/ST (Fa. Polynt): | Weichmacher (TOTM) |
| Edenol 888 (Fa. Emery Oleochemicals GmbH): | Weichmacher (DOS) |
| Aflux 18 (GE 1855) (Fa. Rheinchemie): | Verarbeitungshilfsmittel |
| Edenor C 18 98-100 (Fa. Emery Oleochemicals GmbH): | Verarbeitungshilfsmittel |
| Vulkanox HS/LG (Fa. Lanxess Deutschland GmbH): | Alterungsschutzmittel (TMQ) |
| Disflamoll TOF (Fa. Lanxess Deutschland GmbH): | Flammschutz Weichmacher |

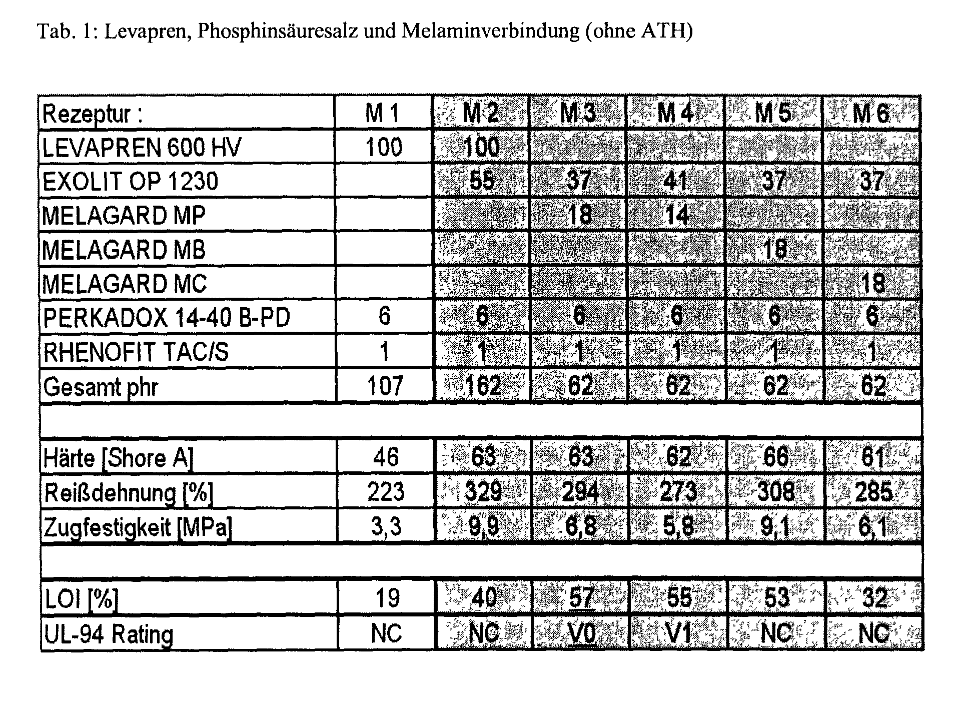

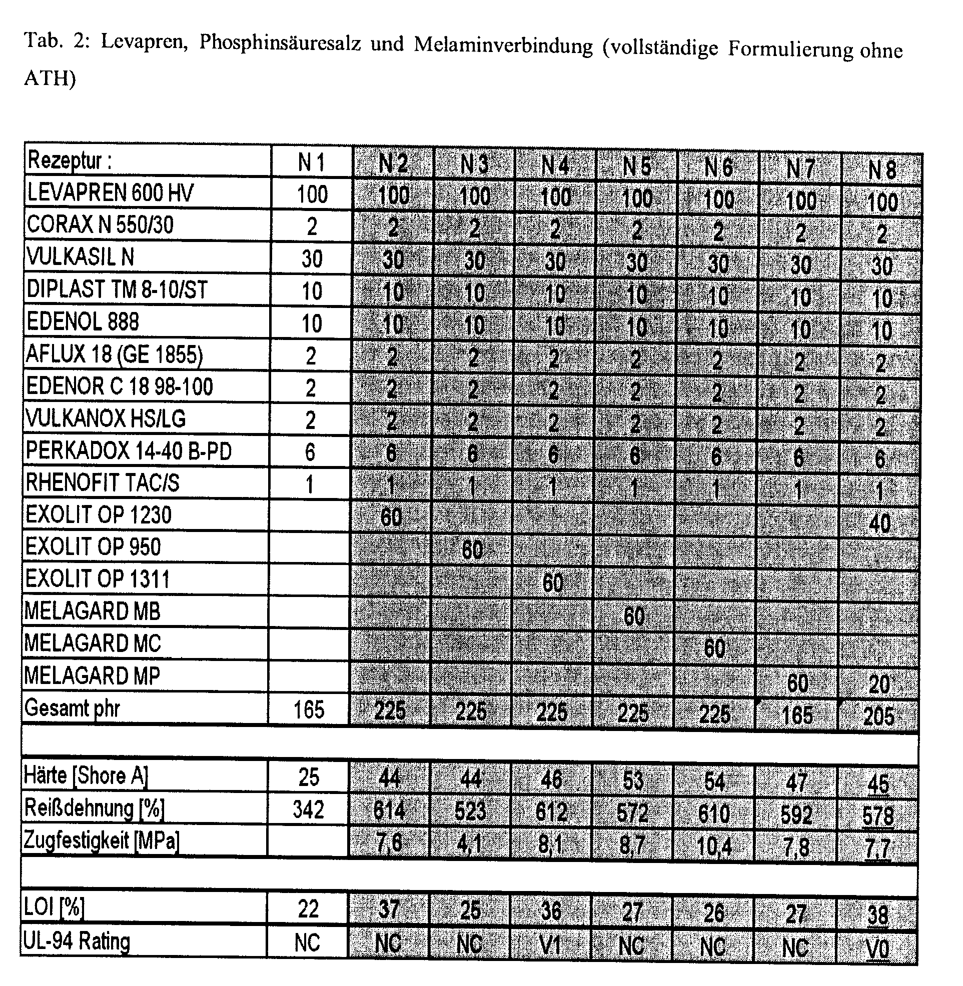

Beide Tabellen zeigen verschiedene Kombinationen von Phosphinsäuresalzen und Melaminverbindungen ohne ATH. Tabelle 1 zeigt Rezepturbeispiele ohne weitere Zuschlagstoffe, wobei M1 als Referenzrezeptur dient. Tabelle 2 zeigt Rezepturbeispiele mit weiteren Zuschlagstoffen, wobei N1 als Referenzrezeptur dient. Der negative Einfluss weiterer Mischungsbestandteile (z.B.: Weichmacher, Verarbeitungshilfsmittel etc.) auf die Flammschutzeigenschaften ist hier ersichtlich (vgl. LOI und UL-94 Rating in Tab.1 mit Tab 2).

Die folgenden Tabellen zeigen erfindungsgemäße flammgeschützte Polymerzusammensetzungen.

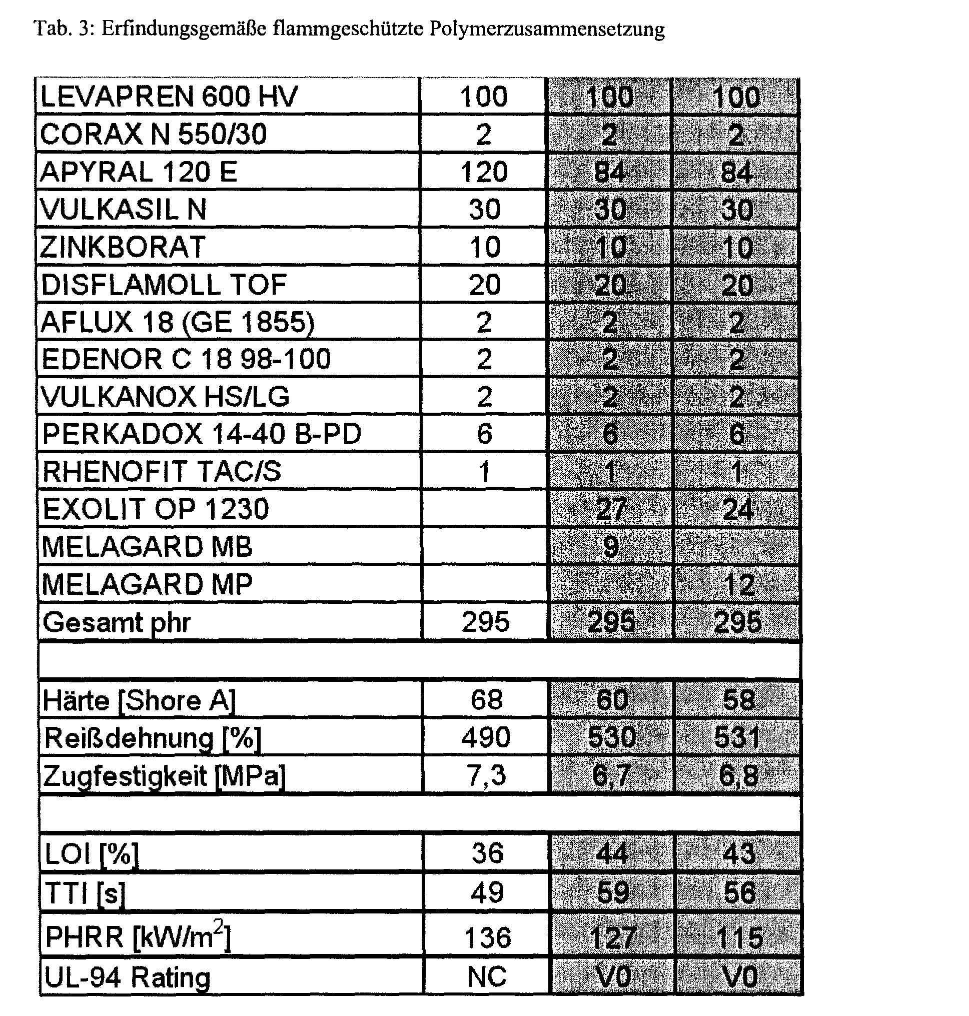

Tabelle 3 zeigt einen verbesserten Flammschutz bei der erfindungsgemäßen flammgeschützten Polymerzusammensetzung mit ATH, Phosphinsäuresalz und Melaminverbindung. Verdeutlicht durch die Erhöhung von LOI, TTI und UL-94 Rating sowie die Erniedrigung der PHRR. Dabei gelingt es sogar die Härte im Vergleich zur Referenzrezeptur zu verringern. Die mechanischen Werte sind vergleichbar.

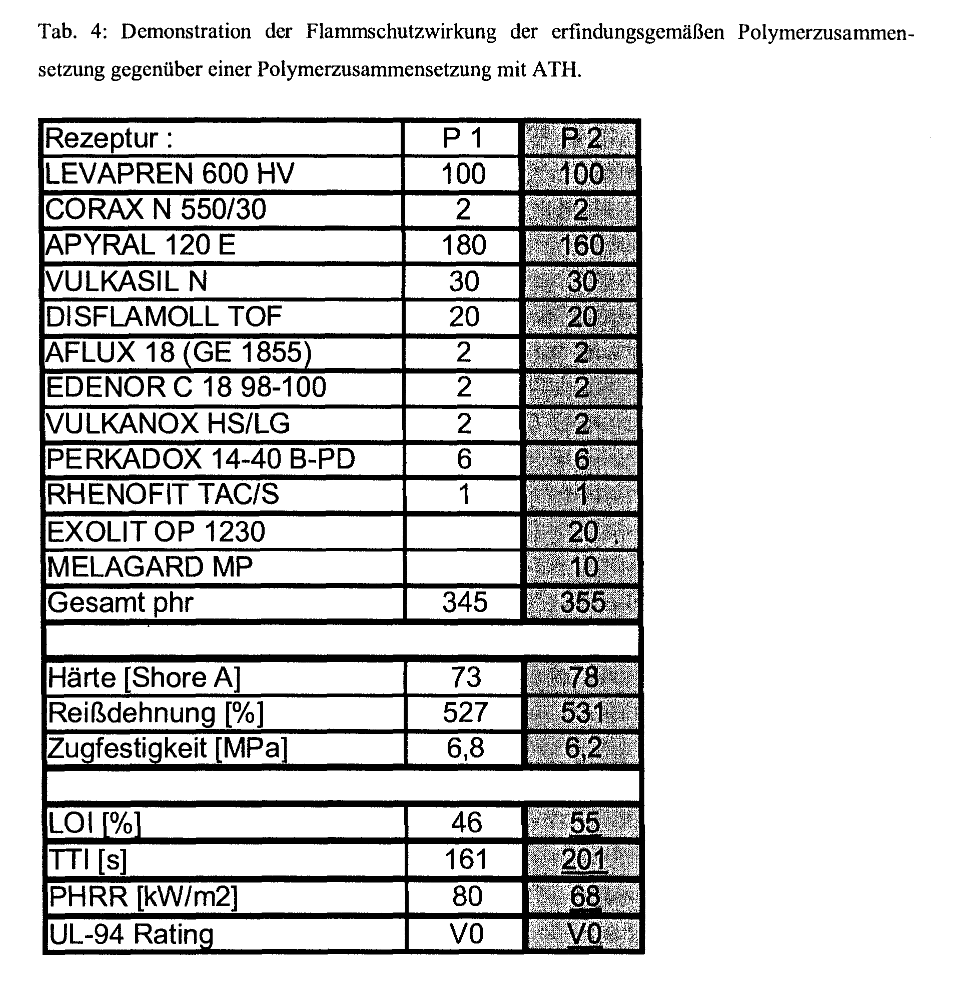

Tabelle 4 demonstriert den überraschenden Effekt der erfindungsgemäßen flammgeschützten Polymerzusammensetzung. Sowohl das Mengenverhältnis als auch die synergistischen Kombination von ATH, Phosphinsäuresalz und Melaminverbindung führen zu einer signifikanten Erhöhung des Flammschutzes.

Anhand grafischer Darstellungen werden die oben beschriebenen Effekte der erfindungsgemäßen flammgeschützten Polymerzusammensetzung dargestellt:
- Fig. 1:: Grafische Darstellung von LOI- Werte von α-Olefin-Vinylacetat-Copolymeren mit und ohne ATH
- Fig. 2:: Grafische Darstellung zu Tab. 4, Härte und LOI

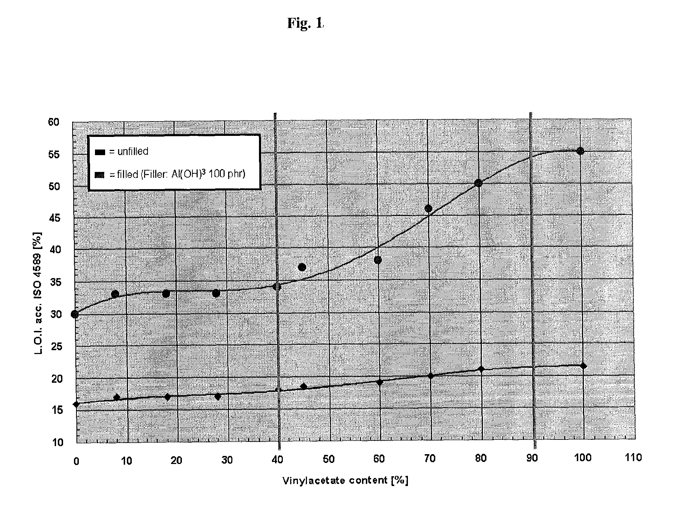

Fig. 1 zeigt einen Anstieg des LOI Werts bei der Verwendung von ATH, insbesondere sobald der Vinylacetatgehalt (VA) des α-Olefin-Vinylacetat-Copolymeren 40 Gew.-% überschreitet. Bei Erhöhung von 0 auf 40 Gew.-% VA steigt der LOI um ca. 15% (LOI: 30% => LOI: 35%). Bei Erhöhung von 40 auf 80 Gew.-% VA steigt der LOI um ca. 40% (LOI: 35% => LOI: 50%).

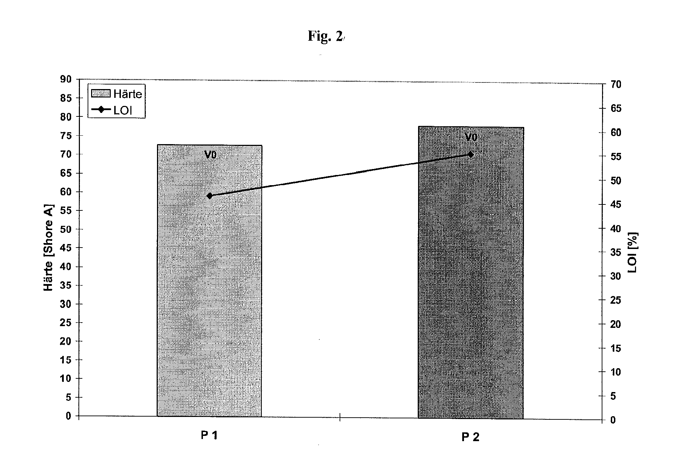

Fig. 2 zeigt einen verbesserten LOI-Wert der erfindungsgemäßen flammgeschützten Polymerzusammensetzung, im Gegensatz zu der aus dem Stand der Technik mit ATH.

## Patentansprüche

1. Flammgeschützte Polymerzusammensetzung erhältlich
- aus einem oder mehreren α-Olefin-Vinylacetat-Copolymeren mit einem Vinylacetatgehalt von 40 bis 90 Gew.-%, bezogen auf das Gesamtgewicht des α-Olefin-Vinylacetat-Copolymeren und
- aus einer synergistischen Flammschutzmittel-Kombination, enthaltend als Komponente A ein Phosphinsäuresalz der Formel (I) 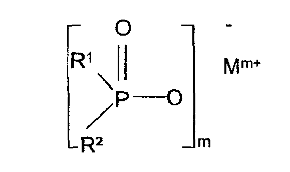 worin
R¹, R² C₁-C₆-Alkyl, vorzugsweise C₁-C₄-Alkyl, linear oder verzweigt;
M Calcium-, Aluminium-, Zink-Ionen;
m 2 oder 3
n 1 oder 3 bedeuten,
- als Komponente B ein Metallhydroxid, bevorzugt Aluminiumhydroxid (ATH) und
- als Komponente C eine Melaminverbindung.

2. Flammgeschützte Polymerzusammensetzung nach Anspruch 1, **dadurch gekennzeichnet, dass** Komponente A ein Aluminiumphoshinat ist.

3. Flammgeschützte Polymerzusammensetzung nach Anspruch 1, **dadurch gekennzeichnet, dass** es sich beim Melaminverbindung um Melaminphosphat, Melaminborat und/oder Melamincyanurat handelt.

4. Flammgeschützte Polymerzusammensetzung nach einem der vorgenannten Ansprüche, **dadurch gekennzeichnet, dass** die Gesamtmenge an synergistischer Flammschutzmittel-Kombination zwischen 90 bis 310 phr, bevorzugt 100 bis 190phr.

5. Flammgeschützte Polymerzusammensetzung nach Anspruch 4, **dadurch gekennzeichnet, dass** sie 70 bis 190 phr Komponente B, 10 bis 60 phr Komponente A und 10 bis 60 phr Komponente C aufweist

6. Flammgeschützte Polymerzusammensetzung nach Anspruch 5, **dadurch gekennzeichnet, dass** sie 80 bis 160phr ATH, 10 bis30 phr Aluminiumphosphinat und 10 bis 20phr Melaminphosphat aufweist.

7. Flammgeschützte Polymerzusammensetzung nach Anspruch 6, **dadurch gekennzeichnet, dass** sie eine LOI von mindestens 35% und gleichzeitig eine Härte von maximal 85 Shore A aufweist.

8. Verwendung der flammgeschützten Polymerzusammensetzung nach einem der vorstehenden Ansprüche zur Herstellung von Kabeln, Kunststoff-Formmassen, elektrischen beschichteten Leitern und Klebstoffen sowie Fußbodenbelägen.

9. Flammschutzmittel-Kombination zur Herstellung flammgeschützter Polymerzusammensetzung aus einem oder mehreren α-Olefin-Vinylacetat-Copolymeren mit einem Vinylacetat-Gehalt von 40 bis 90 Gew.%, bezogen auf das Gesamtgewicht des α-Olefin-Vinylacetat-Copolymeren, **dadurch gekennzeichnet, dass** sie als Komponente A ein Phosphinat, bevorzugt ein Alumniumphosphinat, als Komponente B ein Metallhydroxid, bevorzugt Aluminiumhydroxid (ATH), und als Komponente C eine Melaminverbindung, bevorzugt Melaminphosphat enthält.

10. Flammschutzmittel-Kombination zur Herstellung flammgeschützter Polymerzusammensetzungen nach Anspruch 9, **dadurch gekennzeichnet, dass** sie 70 bis 190 phr Komponente B, 10 bis 60 phr Komponente A und 10 bis 60 phr Komponente C aufweist.

11. Flammschutzmittel-Kombination zur Herstellung flammgeschützter Polymerzusammensetzungen nach Anspruch 10, **dadurch gekennzeichnet, dass** sie 80 bis 160phr ATH, 10 bis30 phr Aluminiumphosphinat und 10 bis 20phr Melaminphosphat aufweist.

12. Verwendung der Flammschutzmittelkombination nach einem der Ansprüche 9 bis 11 zur Aufrüstung von Kunststoffen und Kautschuken, thermoplastischen Elastomeren oder thermoplastischen Vulkanisation.
